(19) Europäisches Patentamt
European Patent Office
Office européen des brevets

(11) Publication number: 0 085 243
B1

(12) **EUROPEAN PATENT SPECIFICATION**

(45) Date of publication of patent specification: **14.05.86**

(51) Int. Cl.$^4$: **C 08 G 18/10**, C 08 G 18/76, C 08 L 75/04, C 09 J 3/16

(21) Application number: **82306727.7**

(22) Date of filing: **16.12.82**

# (54) Single pack heat curable polyurethane composition.

(30) Priority: **07.01.82 US 337623**

(43) Date of publication of application:
**10.08.83 Bulletin 83/32**

(45) Publication of the grant of the patent:
**14.05.86 Bulletin 86/20**

(84) Designated Contracting States:
**AT BE CH DE FR GB IT LI LU NL SE**

(56) References cited:
**DE-A-3 140 884**
**US-A-2 908 657**
**US-A-3 274 160**
**US-A-3 488 302**

(73) Proprietor: **H.B. FULLER COMPANY**
**2400 Kasota Avenue**
**St.Paul, MN 55108 (US)**

(72) Inventor: **Labelle, Stanley Burton**
**554 134th Lane N.E.**
**Anoka Minnesota 55303 (US)**
Inventor: **Hagquist, James A. E.**
**2120 Berkeley**
**St. Paul Minnesota 55105 (US)**

(74) Representative: **Silverman, Warren et al**
**HASELTINE LAKE & CO. Hazlitt House 28**
**Southampton Buildings Chancery Lane**
**London WC2A 1AT (GB)**

**EP 0 085 243 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a single pack heat curable aromatic polyurethane composition, suitable for use as an adhesive, which when cured has excellent structural integrity, high bonding and tensile strength, and resistance to heat. The heat curable polyurethane composition is also suitable for use as an in-mould coating for composite substrates and as an injection moulding composition.

Single pack polyurethane compositions are known in the art. One example is that of Pyron, which is described in U.S. Patent No. 3,488,302. This is a curable one-part polyurethane composition comprising a polyisocyanate prepolymer and pentaerythritol wherein the ratio of pentaerythritol hydroxyl groups to prepolymer isocyanate groups is greater than 2:1, and preferably greater than 5:1. In an attempt to find a suitable one-part polyurethane adhesive, compositions substantially as disclosed in the aforementioned U.S. patent were prepared and found, on curing, to be "cheesy" in consistency and failed to have the mechanical integrity, bonding strength and tensile strength required in an acceptable adhesive.

This observation mirrors the industry's rejection of single pack polyurethane adhesives in favour of two-pack polyurethane compositions. Two-pack polyurethane adhesives are commonly available as systems having components that are stored separately and are mixed immediately prior to application. These adhesives are used in product assembly, for example, in the assembly of automobile components, using equipment that automatically and accurately mixes the two components to optimize bond strength and other properties. Before a production run is begun the mixing equipment is pre-calibrated to mix the precise amounts of components at a ratio that produces a polyurethane adhesive having optimum properties. During the production run adhesive is continuously produced and applied. If the flow of adhesive is shut off, the mixing chamber and other parts of the mixing equipment must be solvent-flushed to remove the active polyurethane components. After solvent flushing the mixing equipment must be recalibrated to ensure that the components are mixed at the correct ratio. A great deal of adhesive is often wasted during the production runs since the mixing machinery continuously prepares adhesive. As much as two-thirds of the adhesive or more can be lost in this manner. The time, labour and equipment required for mixing the two-part adhesive results in waste of time, effort and capital.

Accordingly, it is an object of the invention to provide a single pack polyurethane composition that can be heat-activated or heat-cured to a structurally solid mass providing bond and tensile strength, heat, chemical and moisture resistance suitable for automotive component assembly.

According to this invention, there is provided a single pack heat curable polyurethane composition which comprises:

(a) a substantially liquid aromatic isocyanate-terminated prepolymer phase comprising the reaction product of an aromatic polyisocyanate component, and a polyhydroxyl component; and

(b) a separate solid polyhydroxyl compound phase, comprising a solid polyhydroxyl component having two or more hydroxyl groups, which phase is insoluble in and dispersed throughout the substantially liquid isocyanate-terminated prepolymer phase;

in which composition, the ratio of OH groups in the solid insoluble polyhydroxyl compound phase to the NCO groups in the substantially liquid isocyanate-terminated prepolymer phase is less than 2:1.

The OH/NCO ratio, the ratio of OH groups in the solid insoluble polyhydroxyl compound phase to NCO groups in the liquid isocyanate-terminated prepolymer phase, is less than 2:1 for a useful adhesive to be produced. Preferably, the OH/NCO ratio is from 0.5:1 to 1.8:1 and most preferably, for reasons of optimum structural integrity, bond and tensile strength, the ratio is in the range of from 0.8:1 to 1.5:1. The close control of the OH/NCO ratio is critical for obtaining the optimum properties of the cured polyurethane adhesive.

We have found that the compositions of this invention are efficient to use as adhesives, being lightweight and producing strong bonds. We have found that the adhesives of this invention can be beneficially used in the assembly of vehicles. Plastics and composite materials are being used to an increasing extent to replace metals. The single pack polyurethane composition can be used to join these materials to like materials or to dissimilar materials. One composite material commonly used in vehicle components is called sheet moulding compound (SMC) and generally comprises a glass fibre-reinforced polyester. The polyurethane adhesive composition of this invention is particularly well suited to bonding SMC to itself or to a variety of other substrates. We have found that the polyurethane adhesives of this invention are particularly useful in bonding SMC to metallic substrates. Sheet-moulding compound generally has a higher coefficient of expansion than metallic substrates, and as components comprising metal joined to SMC heat and cool, the metal tends to expand and contract to a lesser degree than SMC placing substantial amounts of stress on the adhesive. The inherent flexibility and strength of the single pack polyurethane adhesive is well suited to forming bonds that resist failure due to this stress.

We have also found that the polyurethane composition can be used in in-mould processes to repair imperfections common in sheet moulding compound. Sheet moulding compound is made by charging glass fibre and polyester resin into a mould. During the moulding process, small

gaps can be left in the surface of the SMC. It is common to fabricate sheet moulding compound into vehicle components such as fenders or doors, and after the assembly of a vehicle is complete, to attend to the imperfections in the components by hand. This process is expensive and slow.

We have found that the imperfection in sheet moulding compound can be filled during an in-mould process using the polyurethane composition of this invention. Sheet moulding compound is made by embedding glass fibres into a polyester resin in a suitable mould. After the mould is opened, a sufficient imperfection filling amount of the polyurethane adhesive is applied to sheet moulding compound. The mould is closed in such a way that the SMC is not crushed, forcing the composition into the imperfections and producing a smooth finish.

We have also found that the polyurethane adhesives of this invention can serve as a replacement for plastisols and body solders in automotive component assembly. The polyurethane adhesive compositions of this invention can be used with a primer applied to the substrate prior to the application of the composition.

Polyurethane compositions are substantially polymeric products which contain an —NHCOO— linkage, known as a urethane group. The fundamental reaction in the field of urethane chemistry is the reaction of an isocyanate with an alcohol, as follows:

$$R\ NCO + R'OH = R\ NH\ CO_2R'$$

wherein R and R' are hydrocarbyl or heterocyclic groups. In the reaction between the isocyanate group and the hydroxyl group, a bond is formed between the hydroxyl oxygen atom and the isocyanate carbon atom, and the active hydrogen of the hydroxyl (OH) group is transferred to the nitrogen of the isocyanate (NCO) group. When the alcohol is a polyfunctional alcohol, which may be a long-chain or polymeric compound with a multiplicity of hydroxyl groups, such as a polyester or polyether, and the isocyanate is a polyisocyanate, the reaction produces a polyurethane structure according to the following reaction:

$$nHO—R—OH + nOCN—R'—NCO =$$

$$H—[—O—R—OOC—HN—R'—]_n—NCO$$

wherein n indicates the number of molecules of a compound involved in the reaction. When the polyisocyanate has more than one NCO group (a functionality greater than 1) and the polyhydroxyl reactants have more than two OH groups (functionality greater than 2), a crosslinked polyurethane may be obtained. The physical properties of the polyurethane will depend largely upon the existence therein of free hydroxyl or isocyanate groups, average molecular weights of the polyhydroxyl compounds and isocyanates, ratio of hydroxyl to isocyanate groups, and on the other functional groups of the reactants, all of which can be varied to give a polyurethane with characteristics suitable for a particular use.

In the preparation and use of the single pack heat curable polyurethane of this invention, two general chemical reactions take place. First, a polyhydroxyl compound or polyol reacts with a polyisocyanate to produce an isocyanate-terminated liquid prepolymer phase. Second, after the isocyanate-terminated liquid prepolymer phase is brought together with a solid insoluble polyhydroxyl compound phase comprising a polyhydroxyl compound or polyol to form the single pack adhesive, the liquid prepolymer phase reacts with the separate solid insoluble polyhydroxyl compound phase at an elevated activating temperature, to form the cured solid adhesive. An insoluble phase is necessary to reduce the reactivity of the curing agent so as to prevent substantial gelling or hardening from taking place during storage.

Polyhydroxyl compounds suitable for use in forming the isocyanate-terminated prepolymer produced in the first reaction when carrying out the process of this invention will comprise molecules having at least two hydroxyl groups attached to an organic backbone, for example an alkylene, polyester, polyether, polylactone or other organic backbone. Blends and mixtures of these polyhydroxyl compounds or polyols may also be used.

These polyhydroxyl compounds can be liquid at ambient temperature and can have a molecular weight and hydroxyl functionality which will result in a prepolymer of manageable viscosity. Typically, a suitable polyhydroxyl compound will have a molecular weight less than 20,000, more typically less than 10,000 preferably less than 5,000. The most practical range of polyhydroxyl compound molecular weights, for reasons of optimum viscosity and reactivity, is from 500 to 3,000. The hydroxyl functionality will typically range from 2 to 6. Higher hydroxyl functionality often results in a prepolymer of unacceptably high viscosity.

The polyhydroxyl compounds used in forming the prepolymers are commonly made by reacting a nucleus having active hydrogens with an alkylene oxide compound. The functionality of the resulting polyhydroxy compound can be varied over a wide range by selecting a hydrogen-containing nucleus which contains one active hydrogen or more than one active hydrogen. Active hydrogen atoms can be provided by hydrogen-containing substituents such as OH, NH, COOH, and SH groups. In building a polyhydroxyl compound, if the desired hydroxyl functionality of the polyhydroxyl compound is 2, the nucleus can be for example water or a diol such as ethylene glycol. If the desired functionality is 3, the nucleus can be, for example, glycerol, trimethylol propane or triethanolamine. For a polyhydroxyl compound having a functionality of 4, the nucleus can be ethylene diamine

or other primary diamine. For a higher functionality, the nucleus can be a hydroxyl-containing oil, carbohydrate or carbohydrate derivative having one or more saccharide or saccharide-like units.

Suitable alkylene oxide compounds for reaction with the active hydrogen-containing nucleus to form the polyhydroxyl compound include such compounds as ethylene oxide, 1,3-butylene oxide, 1,2-propylene oxide and epichlorohydrin.

The preferred polyhydroxyl compounds or polyols for use in the production of the prepolymer of this invention generally will have an average hydroxyl functionality greater than 2, giving a prepolymer with an average isocyanate functionality greater than 2 and an average molecular weight from about 500 to 15,000. This ensures a workable viscosity. Examples of preferred polyhydroxyl compounds include commercially available polyoxyalkylenes having at least two terminal hydroxyl groups in the molecule, for example polyethylene glycols, polypropylene glycols, and polybutylene glycols, hydroxyl-containing polyesters, hydroxyl-containing polyesteramides, polyalkylene ether glycol compounds, polyoxyalkylene compounds, castor oil, tung oil and their alkyd modifications, dihydroxy terminated polyesters produced, for example, by esterification of adipic acid, sebacic acid, and other dicarboxylic acids with long chain polyoxyalkylene glycols, and polyepsilon caprolactonediols. The most preferred hydroxyl-containing compounds for reasons of their low cost, reactivity and availability are the polyoxyalkylene diols or triols of the appropriate molecular weights.

Typical of these most preferred polyhydroxy compounds is the "Poly-G" polyether polyol series of diols and triols marketed in the United States of America, at least, by Olin Chemicals. The diols comprise polyoxypropylene glycols and the triols comprise polyoxypropylene adducts of glycerol, both having for the most part secondary hydroxyl groups. The hydroxyl numbers (mgKOH/g) for this series of polyols range from 28 to 274. Average equivalent weights range from 200 to 2,000. Average formula molecular weights for this series of polyols range from 615 to 4,000.

Another type of polyhydroxyl compound which can give very good strength and chemical resistance and which is thus preferred is a polycaprolactone compound. For example, polyepsilon caprolactonediols having a molecular weight of from 500 to 2,000, a hydroxy functionality of 2, a theoretical hydroxyl number of from 56 to 212, and an equivalent weight of from 260 to 1,000, can impart excellent strength and chemical resistance to the cured polyurethane composition, and can be used when very high strength justifies the high cost.

The polyisocyanate compounds suitable for use in forming the isocyanate-terminated prepolymer include any organic aromatic polyisocyanates having an isocyanate functionality of two or more and at least 1 aromatic group. The polyisocyanate used in the composition of this invention may have any number of aromatic groups, the number typically ranging from 1 to 10. For reasons of reactivity and low cost, the polyisocyanate compounds preferably have from 2 to 3 aromatic groups. The polyisocyanate may also contain other substituents which will not substantially adversely affect the isocyanate-terminated prepolymer or the adhesive properties of the ultimately obtained, heat cured one-part aromatic polyurethane composition. The polyisocyanate compound can also comprise a mixture of aromatic and aliphatic isocyanates.

Typical aromatic polyisocyanates include diphenylmethane diisocyanate compounds (MDI), including its isomers, diphenylmethane 4,4' - diisocyanate, diphenylmethane 2,2' - diisocyanate, diphenylmethane 2,4' - diisocyanate and mixtures thereof; toluene diisocyanate compounds (TDI), including 2,4 - toluene diisocyanate, and 2,6 - toluene diisocyanate and mixtures thereof; isomers of naphthalene diisocyanate, isomers of triphenylmethane triisocyanate, and mixtures thereof. The polyisocyanate is preferably a polyisocyanate having an average functionality from 1.5 to 3.0, if a single pack polyurethane which does not form gaseous occlusions and cures to a desirable strength is to be produced. A fractional functionality can arise by mixing isocyanates of different functionalities. For optimum strength and resistance to formation of gaseous occlusions, the diisocyanate will have a functionality of 2. The MDI and TDI aromatic diisocyanates preferred for use in this invention, for reasons of availability and level of reactivity, comprise diphenylmethane 2,4'- and 4,4' - diisocyanate, and 2,6- and 2,4 - toluene diisocyanate and mixtures thereof. These diisocyanates are commercially available at relatively low cost and can produce polyurethanes with excellent strength, toughness, durability, and resistance to formation of gaseous occlusions.

The solid polyhydroxyl compound phase, which may be termed a curing agent phase comprised by the single pack composition of this invention, comprises a solid polyhydroxyl compound substantially insoluble in the liquid prepolymer which can be dispersed or suspended throughout the prepolymer phase and maintained in the dispersed or suspended state at ambient temperature, until the single pack adhesive is heat-activated and cured. The preferred solid polyhydroxyl compounds are finely divided solid polyols with at least two OH groups attached to an organic backbone, having melting points at or above the preferred curing temperatures.

If during storage and before use, the melting point of the solid is exceeded, the system can begin to cure. In general, a melting point above 130°F (54°C) is desirable. However, since temperatures of the order of 225° to 400°F (107°C to 204°C) are frequently employed in effecting curing, the

preferred compounds have melting points in the range of 230°—410°F (110°—210°C). Typically, to achieve the desired level of crosslinking and hardness in the cured polyurethane adhesive, the polyhydroxyl compound of the separate phase will have from 2 to 6 hydroxyl groups. In general, the solid compound should be finely divided, about 325 Tyler (44 micrometer international standard) mesh or smaller, to promote dispersion in the fluid prepolymer phase.

Examples of solid polyhydroxyl compounds which can be used include pentaerythritol, dipentaerythritol, tripentaerythritol, and mixtures thereof, the methyl alpha d-glucoside of corn starch, (which is a tetrahydroxy compound) corn starch, sucrose (M.P. 170°C), lactose (M.P. 202°C), d-mannitol (M.P. 166°C), anhydrous sorbitol (M.P. 112°C), dulcitol (M.P. 188.5°C) and erythritol (M.P. 120°C). Other solid polyhydroxyl compounds which can be used include copolymers of vinyl esters with ethylenic unsaturated compounds having three or more ester groups replaced by hydroxyl groups.

The preferred polyhydroxyl compound for use in the composition of this invention, for reasons of low cost, stability, and reactivity during curing is pentaerythritol, a crystalline, odourless, white, nonhygroscopic, practically nonvolatile, tetrahydric neopentyl alcohol which may otherwise be designated 2,2 - bis(hydroxymethyl) - 1,3 - propanediol. Pentaerythritol can be made by the condensation of formaldehyde and acetaldehyde. It is available commercially, for example, as the product PE-200, of Hercules, Incorporated. Its melting point has been reported to be from 260°C to 262°C.

Pentaerythritol can be used alone or with its dimers and/or trimers, and/or other isomers, its esters and the esters of its dimers and trimers, and mixtures thereof.

Plasticizers can be used in the compositions of this invention to improve the viscosity, release of gas from the uncured adhesive, the hardness, flexual modulus, and cure time of the cured adhesive. Often a single lubricant will suffice to impart desired properties to the uncured single pack polyurethane and to the cured composition, although in certain instances two or more plasticizers can be advantageous. Any one of the many plasticizers suitable for use in urethane formulations including phthalates, phosphates, chlorinated biphenols and polyphenols, aromatic oils, chlorinated waxes or paraffins, adipates, synthetic rubber polymers, long oil derived from linseed oils and wood rosins, and polysulphide rubber. Normally, the amount of plasticizer will range from 1% to 25% by weight of solids in the polyurethane composition in order to obtain good dispersion of the solid curing agent phase. Plasticizers preferred for use in the composition of this invention include N-ethyl toluene sulphonamide and diisodecylphthalate (DIDP), because they are readily available at relatively low cost. In addition, N-ethyl toluene sulphonamide is particularly useful in this invention as an aid in the introduction and dispersions of solids throughout the prepolymer, while DIDP works especially well to reduce viscosity.

Apart from the foregoing considerations concerning plasticizers, fillers, extenders, thickeners, catalysts and pigments also common additives to polyurethane compositions and may be used in the compositions of this invention. Neutral fillers are ordinarily preferred in order to avoid formation of gas during storage. Highly alkaline materials may have an undesired catalytic effect. Highly acidic materials may attack the urethane or carbamate linkages in the prepolymer.

A thickener or thixotrope will preferably form at least 1% by weight of the single pack aromatic polyurethane composition when the polyurethane composition is to be used as an adhesive, in-mould coating, or injection moulding composition. Silicone-modified hydrophobic silica is typically used as the thickener or thixotrope. CAB-O-SIL TS 200 (trademark of the Cabot Corporation), a hydrophobic inorganic fumed silica powder of very low bulk density having a specific gravity of 1.8 and a surface area of 70±15 $m^2/g$ which has been modified by treatment with an organic silicone compound can be used.

A water binding agent, also termed moisture scavenger, which is a molecular sieve will generally be added to protect against carbon dioxide formation and other undesired side reactions. For example, SYLOID ZN-1 of the formula

$$Na_2O:Al_2O_3:2.8SiO_2:XH_2O,$$

a finely divided, white, inorganic, dehydrating agent with a moisture absorption as high as 36% by weight, a density of 30 pounds per cubic foot (480 $kg/m^3$), and a specific gravity of 2.13, available commercially in the United States of America through Grace Davison Chemical, may be added to reduce formation of gas during the cure cycle. Some inorganic agents such as calcium oxide are generally to be avoided because of their alkalinity.

Catalysts can be included in the single-pack polyurethane in order to obtain faster curing. However it is preferred to omit them because they reduce shelf life.

The single pack polyurethane composition can be made by a process carried out in three stages. The first stage comprises the formation of the substantially liquid prepolymer phase, the second stage comprises the formation of the solid polyhydroxyl compound (curing agent) phase and the third stage comprises the formation of the single pack adhesive by blending the prepolymer phase with the insoluble polyhydroxyl compound phase.

In the first stage involving the formation of the liquid prepolymer phase by reacting a polyisocyanate compound and a suitable polyhydroxyl compound, the polyisocyanate compound is preferably in liquid form. If the isocyanate is not a liquid at room temperature, it can be heated and maintained at a temperature sufficiently above its

melting point to maintain its liquidity during handling and reaction with the polyhydroxyl compound. The polyisocyanate compound will usually be heated and maintained at about 150—170°F (65—77°C) prior to reaction with the polyhydroxy compound. The polyisocyanate can be charged into a reactor suitable for large-scale production and placed under vacuum in the reaction vessel. For polyhydroxy compounds with a functionality of two, 0.4—0.6 moles of the polyhydroxyl compound can be added per mole of the polyisocyanate compound. For polyhydroxyl compounds with a functionality of three, 0.25—0.4 moles of the polyhydroxyl compound can be added per mole of the polyisocyanate compound. The polyhydroxyl compound can be added slowly at a rate keeping the temperature at a level to maintain a workable viscosity, usually at 160—180°F (71—82°C). After the polyhydroxyl compound addition, the mixture may be held at from 160—180°F (71—82°C) or greater for 30 minutes or more to drive the reaction toward completion. Often, the temperature will rise to about 180°F (82°C) or more due to the exothermic nature of the reaction between the isocyanate and the polyhydroxyl compound.

After the polyhydroxyl compound has been reacted with the polyisocyanate, the resulting isocyanate-terminated prepolymer will preferably have an average isocyanate functionality greater than 1 and ranging up to 6 depending on the functionality of the polyhydroxyl compound, and will have an average molecular weight of less than 20,000. A more workable viscosity is achieved if the average isocyanate functionality of the prepolymer is greater than one and not more than 4 with an average molecular weight of less than 15,000. Best of all the average isocyanate functionality ranges from two to three and the average prepolymer molecular weight is from 500 to 15,000.

The mixture can be held under a vacuum in order to remove moisture and monomeric materials and prevent absorption of atmospheric constituents. After about 2 hours, the vacuum can be broken by admission of dry nitrogen. The prepolymer reaction product can be titrated to ensure the concentration of NCO in the prepolymer is within the range of from 12 to 13% (according to ASTM D 2572-80 "Standard Test Method for Isocyanate Groups in Urethane Materials or Prepolymers"). If the composition has an acceptable NCO level, it can be packaged in a suitable container, purged with dry nitrogen, sealed, and set aside to cool.

In the second stage of the preparative process, the curing agent phase or premix is formed. Sufficient plasticizer is charged to a container to disperse the solid polyhydroxyl compound curing agent, the molecular sieve, and the other components present therein. From 0.5 to 2.5 parts of plasticizer and 0.1 to 1.0 parts of molecular sieve will usually be used per part of polyhydroxyl compound. Other additives such as pigments, fillers, extenders and dyes, can also be charged at this time. The container can be connected to a mixer having high shear and its contents can be blended until a Hegman value of 5 units is obtained, or until the polyhydroxyl compound phase is well dispersed. During the blending, the temperature generally rises, to about 140°F (60°C). After blending, the material or premix can be poured or pumped into a suitable container, purged with dry nitrogen, sealed, and allowed to cool to ambient temperature. The molecular sieve must be allowed to absorb moisture from the curing agent phase, before the prepolymer phase and the curing agent phase are mixed, to prevent the reaction of moisture with the urethane groups.

In the third stage of the preparative process, the single pack composition is brought into being by combining the curing agent phase with the prepolymer phase in a ratio of less than 2 equivalents of —OH in the curing agent phase per equivalent of —NCO in the prepolymer phase, and adding at this stage any thixotrope, plasticizer, or other additive needed to adjust viscosity or other properties. These components can be charged to an enclosed mixer under a vacuum preferably above 28 inches Hg ($9.48\times10^4$ Pa) and held therein for sufficient time in order to remove moisture and atmospheric gases. After this time, the mixer is started and the materials agitated at a reasonable speed, continuously under vacuum until well mixed. Optionally, the vacuum is broken by admission of dry nitrogen, the sides of the container and the mixing blades scraped, the mixer again closed, the vacuum applied, and the materials are further well mixed. When mixing is complete, the vacuum is broken by admission of dry nitrogen, the contents of the mixer are transferred to a drum or other suitable storage container, purged with dry nitrogen, and sealed.

The single pack aromatic polyurethane composition of this invention can be applied as an adhesive using common industrial adhesive equipment, can be moulded using common industrial injection or other moulding equipment, and can be applied as an in-mould coating using common industrial moulds and processes.

The single pack polyurethane composition must undergo a substantial heat curing step in order for it to attain the desirable properties described previously, for example, exceptional bonding and tensile strength. The time and temperature required for this curing step can vary for example according to the nature of the substrates, the amount of polyurethane used and the nature of the heating means. However, the important criterion is the temperature of the adhesive at the bond line. At the bond line the adhesive must reach a sufficient curing temperature for a sufficient time to form a strong bond. Further, the cure cycle should not be interrupted with the view to completing the cure cycle at a later time.

The curing temperatures will generally be

below 350°C (632°F) and typically they are within the range of 85—300°C (185—572°F). Curing to any significant extent does not usually occur at temperatures below 60°C (140°F), and rarely is the curing temperature as low as 85°C (185°F). At 300°C curing will generally be complete in two minutes or less, while at lower temperatures, curing times will be longer.

The following non-limiting examples illustrate this invention:

Example I

Preparation of the prepolymer

900 g solid diphenylmethane - 4,4' - diisocyanate (e.g. Isocyanate 125 M) were charged into a 2000 ml four neck reaction flask equipped with agitator, thermometer, addition funnel, vacuum, heating and cooling capabilities, and heated therein and maintained at about 140°F (60°C) until liquid. The reaction flask was connected to a vacuum pump creating a vacuum of about 28" Hg ($9.48\times10^4$ Pa) in the flask. 900 g of a polyether triol, comprising a polyoxypropylene adduct of glycerol (1,2,3 - trihydroxypropane), having three secondary hydroxyls and a molecular weight of about 1500, (Polyol 30—112 by Olin Chemicals) were slowly added to the heated contents of the reaction flask with stirring, at a rate keeping the temperature below 160°F (71°C). After the polyether triol was added, the temperature of the reaction flask, which was increasing because of the exothermic reaction between the diisocyanate and the polyether triol, was permitted to reach about 180°F (82°C). The reactants were held at about 180°F (82°C) for about two hours in order to complete the reaction and kept under vacuum to remove moisture and monomeric materials. After about 2 hours, the vacuum was broken by admission of dry nitrogen. The prepolymer was poured from the reaction flask into a storage container, purged with dry nitrogen, sealed, and allowed to cool at ambient temperature.

Preparation of the curing agent phase

The solid curing agent phase was formed separately from the prepolymer. A one-gallon (4.56 litre) can was charged with 470 g of the liquid plasticizer N-ethyl toluene sulphonamide (Santicizer 8), 470 g finely divided solid pentaerythritol (PE-200), and 60 g molecular sieve Syloid ZN-1, a finely divided, white, inorganic, dehydrating agent with a moisture adsorbtion as high as 36% by weight, density of 30 pounds per square foot (480 kg/m³), and specific gravity of 2.103. These compounds were sheared at high speed in a Cowles dissolver until the solids were thoroughly dispersed in the liquid plasticizer. The curing agent phase was poured into a storage container, purged with dry nitrogen, sealed, and allowed to stand at room temperature for about two days in order to allow the molecular sieve to absorb moisture. The names Santicizer, Syloid and Cowles in the foregoing are trademarks registered in at least some of the designated States.

Preparation of the single pack polyurethane

After the liquid prepolymer and the solid polyhydroxyl compound phase had been formed, 356 g of the prepolymer phase and 113 g of the polyhydroxyl compound phase were combined in a planetary mixer together with 10 g of diisodecyl phthalate (DIDP) as additional plasticizer, and 40 g thixotrope TS-200, a hydrophobic inorganic fumed silica powder of very low bulk density having a specific gravity of 1.8, a surface area of 70±m²/g and a surface modified by treatment with an organic silicone compound. The closed planetary mixer was placed under a vacuum of about 28" Hg ($9.48\times10^4$ Pa) for about 15 minutes in order to withdraw moisture, gases and the like. While maintaining the said vacuum, the planetary mixer was started and the contents were agitated for about 30 minutes at a reasonable speed. The vacuum was broken by admission of dry nitrogen, the walls and mixing blades of the planetary mixer were scraped down, and the mixture was again agitated under a vacuum of about 28" Hg $9.48\times10^4$ Pa for another 30 minutes to ensure thorough mixing. The vacuum was broken by admission of dry nitrogen, and the finished single pack polyurethane composition was discharged into storage containers, purged with dry nitrogen, and sealed. The ratio of OH groups in the solid polyhydroxyl compound phase to NCO groups in the prepolymer phase in the single pack heat curable polyurethane of Example I, was about 1.2:1. The bonding strength of the adhesive of Example I was tested using an Instron (registered trademark) tester. For this purpose the adhesive of Example I was applied to primed coupons of sheet moulding compound (with dimension of 1×4×0.125" i.e. 2,54×10.16×0.32 cm). The coupons were joined by means of the adhesive and the bond was cured at 300°F (149°C) for 20 minutes. Samples were tested under procedures and conditions typical in automotive production, and the tests were based on automotive industry specifications. The test results were as follows:

Instron tester, crosshead speed 2.54 cm/minute, tested at 410 to 640 psi (2829 to 4416 kPa)

Ambient Temperature—Substrate Failed
24 Hour Boiling Water—Substrate Failed
Cycled Twice 400°F (204°C) for 30 minutes per cycle—Substrate Failed

High temperature tests:

180°F (82°C—Adhesive Failed at 280 psi (1932 kPa)
200°F (93°C)—Adhesive Failed at 267 psi (1842 kPa)

These test results show that the cured polyurethane composition can withstand conditions much more rigorous than those to which it would normally be subjected in use. Where the results indicate that the substrate failed, the SMC coupon yielded to the stress, while the adhesive did not yield. The high temperature test results show that at high temperatures the cured single pack polyurethane adhesive failed only when subjected to stresses well above most automobile industry standards (about 180 psi i.e. 1242 kPa)

Example II

Preparation of the prepolymer

The preparation of the prepolymer in Example I was repeated except that 300 g of a mixture of about 80 parts by weight of 2,4' - toluene diisocyanate and 20 parts by weight of 2,6' - toluene diisocyanate were used in place of the MDI, and 700 g of a polyether diol comprising a polyoxypropylene glycol having two secondary hydroxyls and an average molecular weight about 1,000, (Poly G 20-112) was used in place of the triol used in Example I.

Preparation of the curing agent phase

The preparation of the curing agent phase in Example I was repeated.

Preparation of the single pack polyurethane

The preparation of the single pack polyurethane in Example I was repeated except that 720 g of the prepolymer of Example II, 140 g of the curing agent phase of Example II, 50 g of plasticizer N-ethyl toluene sulphonamide (Santicizer 8), and 70 g of thixotrope TS-200 were used instead of the additional components used at this stage (adhesive production) in Example I. The OH/NCO ratio of the final product or single pack heat curable polyurethane composition of Example II was 1.2:1. Typical properties of the heat cured adhesive of Example II were good tear strength, flexibility, and tensile strength.

**Claims**

1. A single pack heat curable polyurethane composition which comprises:

(a) a substantially liquid aromatic isocyanate-terminated prepolymer phase comprising the reaction product of an aromatic polyisocyanate component, and a polyhydroxyl component; and

(b) a separate solid polyhydroxyl compound phase, comprising a solid polyhydroxyl component having two or more hydroxyl groups, which phase is insoluble in and dispersed throughout the substantially liquid-isocyanate-terminated prepolymer phase;

in which composition, the ratio of OH groups in the solid insoluble polyhydroxyl compound phase to the NCO groups in the substantially liquid isocyanate-terminated prepolymer phase is less than 2:1.

2. The compositions of claim 1, wherein the ratio of OH groups in the solid insoluble polyhydroxyl compound phase to NCO groups in the substantially liquid isocyanate-terminated prepolymer phase is in the range of from 0.5:1 to 1.8:1.

3. The composition of claim 2 wherein the ratio of OH groups in the solid insoluble polyhydroxyl compound phase to NCO groups in the substantially liquid isocyanate-terminated prepolymer phase is in the range of from 0.8:1 to 1.5:1.

4. The composition of any one of the preceding claims, wherein the solid polyhydroxyl compound phase comprises a solid polyhydroxyl component having 2 to 6 hydroxyl groups.

5. The composition of any one of the preceding claims, wherein the solid polyhydroxyl component is finely divided.

6. The composition of any one of the preceding claims, wherein the solid polyhydroxyl component comprises pentaerythritol.

7. The composition of any one of claims 1 to 5, wherein the solid polyhydroxyl component comprises an ester or a mixture of esters of pentaerythritol having a hydroxyl functionality of at least 2.

8. The composition of any one of claims 1 to 5, wherein the solid polyhydroxyl component comprises dimers and trimers of pentaerythritol and mixtures thereof.

9. The composition of any one of the preceding claims, wherein, in the prepolymer phase, the aromatic polyisocyanate component comprises an aromatic diisocyanate.

10. The composition of claim 9 wherein the aromatic diisocyanate comprises a diphenylmethane diisocyanate or a toluene diisocyanate.

11. The composition of claim 10 wherein the diphenylmethane diisocyanate is selected from diphenylmethane - 2,2' - diisocyanate, diphenylmethane 2,4' - diisocyanate, diphenylmethane - 4,4' - diisocyanate, or mixtures thereof and the toluene diisocyanate comprises 2,4 - toluene diisocyanate, 2,6 - toluene diisocyanate, or mixtures thereof.

12. The composition of any one of the preceding claims, wherein, in the isocyanate-terminated liquid prepolymer phase, the polyhydroxyl component comprises a compound having a substantially organic backbone, and 2 to 6 hydroxyl groups, the backbone being selected from alkylene, polyester, polyether and polylactone backbones.

13. The composition of any one of the preceding claims, wherein, in the isocyanate-terminated liquid prepolymer phase, the polyhydroxyl compound comprises a polycaprolactone having a molecular weight of from 500 to 2,000, a hydroxyl functionality of about 2, and an equivalent weight of from 260 to 1,000.

14. The composition of any one of claims 1 to 12, wherein, in the isocyanate-terminated liquid prepolymer phase, the polyhydroxyl compound comprises a polyether diol or a polyether triol.

15. The composition of any one of the preceding claims, wherein the isocyanate-terminated liquid prepolymer has an average isocyanate functionality ranging from greater than one to six and an average molecular weight less than 20,000.

16. The composition of claim 15, wherein the isocyanate-terminated prepolymer has an average isocyanate functionality ranging from

greater than one to four and an average molecular weight less than 15,000.

17. The composition of claim 16 wherein the isocyanate-terminated prepolymer has an average isocyanate functionality ranging from two to three and an average molecular weight of from 500 to 15,000.

18. A method of joining at least two substrates, which comprises (1) forming an assembly comprising at least two said substrates and a sufficient bonding amount of the composition of any one of the preceding claims contacting the substrates and (2) heat curing the bond line.

19. The method of claim 18, which comprises the additional step of applying a primer to a surface of at least one of the substrates before forming the assembly.

20. The method of claim 18 or 19, wherein at least one substrate is made from a material different from that of a said substrate thereadjacent.

21. The method of claim 18, 19 or 20, wherein at least one substrate comprises sheet moulding compound.

22. The method of claim 18, 19, 20 or 21, wherein at least one substrate comprises a substantially metallic substrate.

23. A method for the in-mould coating of a composite substrate which comprises forming a composite substrate in a heated mould, opening the mould, introducing an imperfection filling amount of the polyurethane composition of any one of claims 1 to 18 into the mould, closing the mould to form a coated composite substrate and curing the coated composite substrate.

24. The method of claim 23 wherein the composite substrate is formed of sheet moulding compound and closing of the mould serves to force the polyurethane composition into the imperfections in the substrate in such a way that the sheet moulding compound is not crushed.

25. A method of forming an article, which comprises injection moulding the composition of any one of claims 1 to 17.

26. The method of claim 25 wherein at least one filler is incorporated into the composition of claim 1 prior to carrying out injection moulding.

**Patentansprüche**

1. Wärmehärtbare Einkomponenten-Polyurethanzusammensetzung, die

(a) eine im wesentlichen flüssige aromatische isocyanatterminierte Präpolymerphase, umfassend das Reaktionsprodukt einer aromatischen Polyisocyanatkomponente und einer Polyhydroxylkomponente, und

(b) eine getrennte feste Polyhydroxylverbindungsphase, umfassend eine feste Polyhydroxylkomponente mit zwei oder mehr Hydroxylgruppen, welche Phase in der im wesentlichen flüssigen isocyanatterminierten Präpolymerphase unlöslich ist und durch diese hindurch dispergiert ist, umfaßt, in welcher Zusammensetzung das Verhältnis der OH-Gruppen in der festen unlöslichen Polyhydroxylverbindungsphase zu den NCO-Gruppen in der im wesentlichen flüssigen isocyanatterminierten Präpolymerphase weniger als 2:1 beträgt.

2. Zusammensetzung nach Anspruch 1, worin das Verhältnis der OH-Gruppen in der festen unlöslichen Polyhydroxylverbindungsphase zu den NCO-Gruppen in der im wesentlichen flüssigen isocyanatterminierten Präpolymerphase im Bereich von 0,5:1 bis 1,8:1 liegt.

3. Zusammensetzung nach Anspruch 2, worin das Verhältnis der OH-Gruppen in der festen unlöslichen Polyhydroxylverbindungsphase zu den NCO-Gruppen in der im wesentlichen flüssigen isocyanatterminierten Präpolymerphase im Bereich von 0,8:1 bis 1,5:1 liegt.

4. Zusammensetzung nach einem der vorhergehenden Ansprüche, worin die feste Polyhydroxylverbindungsphase eine feste Polyhydroxylkomponente mit 2 bis 6 Hydroxylgruppen aufweist.

5. Zusammensetzung nach einem der vorhergehenden Ansprüche, worin die feste Polyhydroxylkomponente fein verteilt ist.

6. Zusammensetzung nach einem der vorhergehenden Ansprüche, worin die feste Polyhydroxylkomponente Pentaerythrit umfaßt.

7. Zusammensetzung nach einem der Ansprüche 1 bis 5, worin die feste Polyhydroxylkomponente einen Ester oder eine Mischung von Estern von Pentaerythrit mit einer Hydroxylfunktionalität von mindestens 2 umfaßt.

8. Zusammensetzung nach einem der Ansprüche 1 bis 5, worin die feste Polyhydroxylkomponente Dimere und Trimere von Pentaerythrit und Mischungen hievon umfaßt.

9. Zusammensetzung nach einem der vorhergehenden Ansprüche, worin in der Präpolymerphase die aromatische Polyisoxyanatkomponente ein aromatisches Diisocyanat umfaßt.

10. Zusammensetzung nach Anspruch 9, worin das aromatische Diisocyanat ein Diphenylmethandiisocyanat oder ein Toluoldiisocyanat umfaßt.

11. Zusammensetzung nach Anspruch 10, worin das Diphenylmethandiisocyanat ausgewählt ist aus Diphenylmethan - 2,2' - diisocyanat, Diphenylmethan - 2,4' - diisocyanat, Diphenylmethan - 4,4' - diisocyanat oder Mischungen hievon und das Toluoldiisocyanat 2,4 - Toluoldiisocyanat, 2,6 - Toluoldiisocyanat oder Mischungen hievon umfaßt.

12. Zusammensetzung nach einem der vorhergehenden Ansprüche, worin in der isocyanatterminierten flüssigen Präpolymerphase die Polyhydroxylkomponente eine Verbindung mit einem im wesentlichen organischen Skelett und 2 bis 6 Hydroxylgruppen umfaßt, wobei das Skelett ein Alkylen-, Polyester-, Polyäther- oder Polylactonskelett ist.

13. Zusammensetzung nach einem der vorhergehenden Ansprüche, worin in der isocyanatterminierten flüssigen Präpolymerphase die

Polyhydroxylverbindung ein Polycaprolacton mit einem Molgewicht von 500 bis 2000, einer Hydroxylfunktionalität von etwa 2 und einem Äquivalentgewicht von 260 bis 1000 ist.

14. Zusammensetzung nach einem der Ansprüche 1 bis 12, worin in der isocyanatterminierten flüssigen Präpolymerphase die Polyhydroxylverbindung ein Polyätherdiol oder ein Polyäthertriol umfaßt.

15. Zusammensetzung nach einem der vorhergehenden Ansprüche, worin das isocyanatterminierte flüssige Präpolymer eine mittlere Isocyanatfunktionalität von mehr als 1 bis 6 und ein mittleres Molgewicht von weniger als 20 000 aufweist.

16. Zusammensetzung nach Anspruch 15, worin das isocyanatterminierte Präpolymer eine mittlere Isocyanatfunktionalität von mehr als 1 bis 4 und ein mittleres Molgewicht von weniger als 15 000 aufweist.

17. Zusammensetzung nach Anspruch 16, worin das isocyanatterminierte Präpolymer eine mittlere Isocyanatfunktionalität von 2 bis 3 und ein mittleres Molgewicht von 500 bis 15 000 aufweist.

18. Verfahren zum Vereinigen von mindestens zwei Substraten, welches (1) das Bilden einer Zusammensetzung, die mindestens zwei Substrate und einen ausreichenden Bindungsanteil der Zusammensetzung nach einem der vorhergehenden Ansprüche, die mit den Substraten in Berührung ist, aufweist und (2) die Wärmehärtung der Bindungslinie umfaßt.

19. Verfahren nach Anspruch 18, welches den zusätzlichen Schritt des Aufbringens eines Primers auf eine Oberfläche mindestens eines der Substrate vor dem Bilden der Zusammensetzung umfaßt.

20. Verfahren nach Anspruch 18 oder 19, worin mindestens eine Substrat aus einem anderen Material als das des benachbarten Substrats besteht.

21. Verfahren nach Anspruch 18, 19 oder 20, worin mindestens ein Substrat eine folienbildende Verbindung umfaßt.

22. Verfahren nach Anspruch 18, 19, 20 oder 21, worin mindestens ein Substrat ein im wesentlichen metallisches Substrat umfaßt.

23. Verfahren zum Beschichten eines Verbundsubstrats in einer Form, welches das Bilden eines Verbundsubstrats in einer erhitzten Form, Öffnen der Form, Einführen eines Fehlstellen füllenden Anteils der Polyurethanzusammensetzung nach einem der Ansprüche 1 bis 18 in die Form, Schließen der Form unter Bildung eines beschichteten Verbundsubstrats und Härten des beschichteten Verbundsubstrats umfaßt.

24. Verfahren nach Anspruch 23, worin das Verbundsubstrat aus einer folienbildenden Verbindung gebildet wird und das Schließen der Form dazu dient, die Polyurethanzusammensetzung derart in die Fehlstellen im Substrat zu drücken, daß die folienbildende Verbindung nicht zerstoßen wird.

25. Verfahren zum Bilden eines Erzeugnisses, welches das Spritzformen der Zusammensetzung nach einem der Ansprüche 1 bis 17 umfaßt.

26. Verfahren nach Anspruch 25, worin mindestens ein Füllstoff der Zusammensetzung nach Anspruch 1 vor Durchführung der Spritzformung einverleibt wird.

**Revendications**

1. Composition de polyuréthanne thermodurcissable à un composant, qui comprend:

(a) une phase de prépolymère aromatique à terminaison isocyanate principalement liquide comprenant le produit de réaction d'un composant polyisocyanate aromatique et d'un composant polyhydroxylique; et

(b) une phase solide séparée de composé polyhydroxylique comprenant un composant polyhydroxylique solide ayant deux ou plus de deux groupes hydroxyle, ladite phase étant insoluble et entièrement dispersée dans la phase de prépolymère à terminaison isocyanate principalement liquide;

composition dans laquelle le rapport des groupes OH de la phase de composé polyhydroxylique insoluble solide aux groupes NCO dans la phase de prépolymère à terminaison isocyanate principalement liquide étant inférieur à 2:1.

2. Composition suivant la revendication 1, dans laquelle le rapport des groupes OH dans la phase de composé polyhydroxylique insoluble solide aux groupes NCO dans la phase de prépolymère à terminaison isocyanate principalement liquide se situe dans l'intervalle de 0,5:1 à 1,8:1.

3. Composition suivant la revendication 2, dans laquelle le rapport des groupes OH dans la phase de composé polyhydroxylique insoluble solide aux groupes NCO dans la phase de prépolymère à terminaison isocyanate principalement liquide est dans l'intervalle de 0,8:1 à 1,5:1.

4. Composition suivant l'une quelconque des revendications précédentes, dans laquelle la phase de composé polyhydroxylique solide comprend un composant polyhydroxylique solide ayant 2 à 6 groupes hydroxyle.

5. Composition suivant l'une quelconque des revendications précédentes, dans laquelle le composant polyhydroxylique solide est finement divisé.

6. Composition suivant l'une quelconque des revendications précédentes, dans laquelle le composant polyhydroxylique solide comprend du pentaérythritol.

7. Composition suivant l'une quelconque des revendications 1 à 5, dans laquelle le composant polyhydroxylique solide comprend un ester ou un mélange d'esters de pentaérythritol ayant une fonctionnalité hydroxyle au moins égale à 2.

8. Composition suivant l'une quelconque des revendications 1 à 5, dans laquelle le composant polyhydroxylique solide comprend des dimères et des trimères de pentaérythritol et leurs mélanges.

9. Composition suivant l'une quelconque des revendications précédentes, dans laquelle le

composant polyisocyanate aromatique, dans la phase de prépolymère, comprend un diisocyanate aromatique.

10. Composition suivant la revendication 9, dans laquelle le diisocyanate aromatique comprend un diphénylméthane-diisocyanate ou un diisocyanatotoluène.

11. Composition suivant la revendication 10, dans laquelle le diphénylméthane-diisocyanate est choisi entre le diphénylméthane - 2,2' - diisocyanate, le diphénylméthane - 2,4' - diisocyanate, le diphénylméthane - 4,4' - diisocyanate ou leurs mélanges et le diisocyanatotoluène comprend le 2,4 - diisocyanatotoluène, le 2,6 - diisocyanatotoluène ou leurs mélanges.

12. Composition suivant l'une quelconque des revendications précédentes, dans laquelle le composant polyhydroxylique, dans la phase de prépolymère liquide à terminaison isocyanate, comprend un composé ayant un squelette principalement organique et 2 à 6 groupes hydroxyle, le squelette étant choisi entre des squelettes d'alkylène, de polyester, de polyéther et de polylactone.

13. Composition suivant l'une quelconque des revendications précédentes, dans laquelle le composé polyhydroxylique, dans la phase de prépolymère liquide à terminaison isocyanate, comprend une polycaprolactone ayant un poids moléculaire de 500 à 2000, une fonctionnalité hydroxyle d'environ 2 et un poids équivalent de 260 à 1000.

14. Composition suivant l'une quelconque des revendications 1 à 12, dans laquelle le composé polyhydroxylique, dans la phase de prépolymère liquide à terminaison isocyanate, comprend un polyéther-diol ou un polyéther-triol.

15. Composition suivant l'une quelconque des revendications précédentes, dans laquelle le prépolymère liquide à terminaison isocyanate a une fonctionnalité isocyanate moyenne allant d'une valeur supérieure à un à la valeur six et un poids moléculaire moyen inférieur à 20 000.

16. Composition suivant la revendication 15, dans laquelle le prépolymère à terminaison isocyanate a une fonctionnalité isocyanate moyenne allant d'une valeur supérieure à un à la valeur quatre et un poids moléculaire moyen inférieur à 15 000.

17. Composition suivant la revendication 16, dans laquelle le prépolymère à terminaison isocyanate a une fonctionnalité isocyanate moyenne allant de deux à trois et un poids moléculaire moyen de 500 à 15 000.

18. Procédé pour réunir au moins deux substrats, qui consiste (1) à former un ensemble comprenant au moins deux desdits substrats et une quantité liante suffisante de la composition suivant l'une quelconque des revendications précédentes au contact des substrats et (2) à faire durcir à la chaleur la ligne de liaison.

19. Procédé suivant la revendication 18, qui comprend l'étape additionnelle d'application d'une couche d'apprêtage à la surface d'au moins l'un des substrats avant la formation de l'ensemble.

20. Procédé suivant la revendication 18 ou 19, dans lequel au moins un substrat est réalisé en une matière différente de celle d'un substrat qui y est adjacent.

21. Procédé suivant la revendication 18, 19 ou 20, dans lequel au moins un substrat comprend une composition moulable en feuille.

22. Procédé suivant la revendication 18, 19, 20 ou 21, dans lequel au moins un substrat comprend un substrat principalement métallique.

23. Procédé de revêtement en moule d'un substrat composite, qui consiste à former un substrat composite dans un moule chauffé, à ouvrir le moule, à introduire une quantité remplissant les imperfections de la composition de polyuréthanne de l'une quelconque des revendications 1 à 18 dans le moule, à fermer le moule pour former un substrat composite revêtu et à faire durcir le substrat composite revêtu.

24. Procédé suivant la revendication 23, dans lequel le substrat composite est formé d'une composition moulable en feuille et la fermeture du moule sert à obliger la composition de polyuréthanne à pénétrer dans les imperfections du substrat de telle manière que la composition moulable en feuille ne soit pas écrasée.

25. Procédé de formage d'un article, qui consiste à mouler par injection la composition suivant l'une quelconque des revendications 1 à 17.

26. Procédé suivant la revendication 25, dans lequel au moins une charge est incorporée à la composition de la revendication 1 avant l'exécution du moulage par injection.